Europäisches Patentamt

European Patent Office

Office européen des brevets

(11) Veröffentlichungsnummer: **0 381 826**
**A1**

## (12) EUROPÄISCHE PATENTANMELDUNG

(21) Anmeldenummer: **89121651.7**

(22) Anmeldetag: **23.11.89**

(51) Int. Cl.5: **C01B 21/26**

(30) Priorität: **07.02.89 DE 3903570**

(43) Veröffentlichungstag der Anmeldung:
**16.08.90 Patentblatt 90/33**

(84) Benannte Vertragsstaaten:
**AT BE CH DE ES FR GB GR IT LI LU NL SE**

(71) Anmelder: **Uhde GmbH**
**Friedrich-Uhde-Strasse 15**
**D-4600 Dortmund 1(DE)**

(72) Erfinder: **Wiegand, Wilhelm Karl, Dr.**
**Weisse Taube 11**
**D-4600 Dortmund 50(DE)**
Erfinder: **Thiemann, Michael, Dr.**
**Meininghausstrasse 12**
**D-4600 Dortmund 1(DE)**
Erfinder: **Scheibler, Erich**
**Sindernweg 38**
**D-4600 Dortmund 30(DE)**

(74) Vertreter: **Patentanwälte Meinke und**
**Dabringhaus Dipl.-Ing. J. Meinke Dipl.-Ing. W.**
**Dabringhaus**
**Westenhellweg 67**
**D-4600 Dortmund 1(DE)**

(54) **Verfahren zur Erzeugung von mechanischer Energie bei der NH3-Oxidation im HNO3-Prozess.**

(57) Mit einem Verfahren zur Erzeugung von mechanischer Energie bei der $NH_3$-Oxidation im $HNO_3$-Prozeß soll eine Lösung geschaffen werden, mit welcher die zur Verfügung stehende Wärmeenergie besser genutzt werden kann, wobei insbesondere eine Ausnutzung der Wärmeenergie der $NO_x$-Gase auf geringem Temperaturniveau möglich sein soll.

Dies wird dadurch gelöst, daß vor der Oxidation flüssiges $NH_3$ bei einem Druck, der um ein Mehrfaches über dem Druck bei der Verbrennung liegt, mittels der Prozeßwärme der erzeugten $NO_x$-Gase verdampft und überhitzt wird, und daß anschließend das überhitzte $NH_3$ energieerzeugend in einer Turbine entspannt wird.

Fig. 1

EP 0 381 826 A1

Die Erfindung betrifft ein Verfahren zur Erzeugung von mechanischer Energie bei der NH₃-Oxidation im HNO₃-Prozeß, bei dem NH₃ durch Verbrennung zu NO$_x$-Gasen umgesetzt wird.

Die Oxidation des NH₃ zu NO$_x$ im Salpetersäure-Prozeß wird üblicherweise im Temperaturbereich zwischen 800 - 970° C durchgeführt. Zur Absorption des NO$_x$ mit H₂O zu HNO₃ werden aus reaktionstechnischen Gründen jedoch tiefe Temperaturen angestrebt. Deshalb ist es erforderlich, den NO$_x$-Gasstrom vor der Absorption abzukühlen.

Diese Kühlung erfolgt auf hohem Temperaturniveau üblicherweise unter Nutzung der Prozeßwärme zur Dampferzeugung und/oder zur Erwärmung des nach der Absorption freiwerdenden Restgases, das anschließend z. B. über eine Turbine entspannt wird.

Auf niedrigerem Temperaturniveau der NO$_x$-Gase unterhalb etwa 200° C erfolgt die Kühlung jedoch ohne Nutzung der Prozeßwärme, wobei die übertragene Wärme in ein Kühlsystem abgeführt wird. Somit wird die noch in den NO$_x$-Gasen enthaltene Wärmeenergie nicht weiter genutzt, vielmehr werden in Abhängigkeit vom jeweiligen Verfahren größere Kühlwassermengen benötigt mit entsprechenden Auswirkungen auf die Betriebskosten oder es werden entsprechend große Wärmeaustauscher benötigt, die die Investitionskosten vergrößern.

Demgegenüber besteht die Aufgabe der Erfindung in der Schaffung einer Lösung, mit welcher die bei einem solchen Verfahren zur Verfügung stehende Wärmeenergie besser genutzt werden kann, wobei insbesondere eine Ausnutzung der Wärmeenergie der NO$_x$-Gase auf relativ geringem Temperaturniveau möglich gemacht werden soll.

Diese Aufgabe wird mit einem Verfahren der eingangs bezeichneten Art erfindungsgemäß dadurch gelöst, daß vor der Oxidation flüssiges NH₃ bei einem Druck, der um ein Mehrfaches über dem Druck bei der Verbrennung liegt, mittels der Prozeßwärme der erzeugten NO$_x$-Gase verdampft und überhitzt wird, und daß anschließend das überhitzte NH₃ energieerzeugend in einer Turbine entspannt wird.

Mit diesem Verfahren ist es möglich, die im Salpetersäure-Prozeß vorhandene Wärmeenergie wesentlich besser auszunutzen, in dem auch die Wärmeenergie der NO$_x$-Gase auf niedrigerem Temperaturniveau noch sinnvoll ausgenutzt werden kann. Diese Energieausnutzung ist durch die Anwendung von Ammoniak als Energieträger möglich, das aufgrund seines Verdampfungsverhaltens schon bei relativ niedrigen Temperaturen unter Druck verdampft und überhitzt werden kann. Dagegen wären bei Verwendung des bei Wärmekraftmaschinen üblichen Energieträgers Wasser wesentlich höhere Temperaturen notwendig. Die erzeugte Energie kann direkt im Prozeß verbraucht werde.

In besonders vorteilhafter Ausgestaltung der Erfindung ist vorgesehen, daß das flüssige NH₃ bei einem Druck von 10 bis 60 bar, insbesondere 25 bar, verdampft und überhitzt wird. Dieser Druckbereich hat sich als energetisch besonders günstig erwiesen.

In Abhängigkeit von dem gewählten Druck sieht die Erfindung vor, daß das NH₃ auf 130 bis 250° C, insbesondere 140 bis 180° C, überhitzt wird. Eine solche Überhitzung ist mittels der zur Verfügung stehenden NO$_x$-Gase auf relativ niedrigem Temperaturniveau möglich, so daß deren Wärmeenergie weitgehend ausgenutzt werden kann.

Schließlich ist es zweckmäßig, wenn das überhitzte NH₃ in der Gegendruckturbine bis auf den bei der Verbrennung herrschenden Druck entspannt wird. Dabei wird natürlich nur so weit entspannt, daß mögliche Druckverluste bis zum Brenner ausgeglichen werden können.

Die Erfindung ist nachstehend anhand der Zeichnung beispielsweise näher erläutert. Diese zeigt in

Fig. 1 eine erste Verfahrensvariante in einem vereinfachten Schaltbild

Fig. 2 eine zweite Verfahrensvariante in einem vereinfachten Schaltbild und

Fig. 3 das in einem vereinfacht wiedergegebenen Temperatur-Entropie-Diagramm für Ammoniak dargestellte Wirkprinzip.

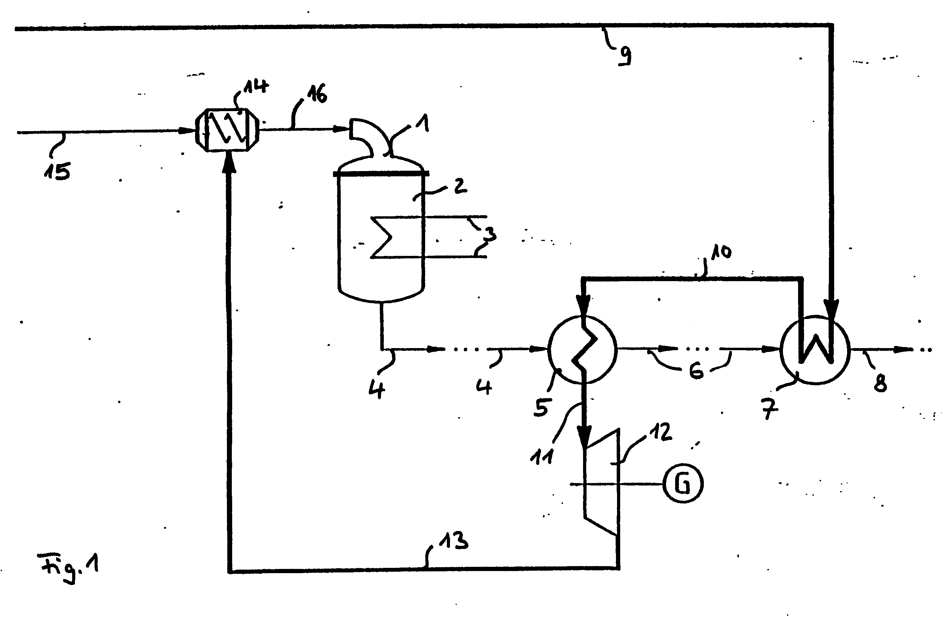

Von einer Salpetersäureanlage ist in Fig. 1 nur vereinfacht der Oxidationsteil wiedergegeben. Ein Brenner 1 zur Verbrennung eines Ammoniak/Luftgemisches zu NO$_x$-Gasen ist an einen Wärmeaustauscher 2, z. B. Dampferzeuger, angeschlossen, dem über Leitungen 3 z. B. zu verdampfendes Wasser zugeführt wird, an das im Dampferzeuger 2 Wärmeenergie von den im Brenner erzeugten NO$_x$-Gasen abgegeben wird. Am Austritt des Dampferzeugers 2 ist eine Leitung 4 angeordnet, durch welche die NO$_x$-Gase austreten und ggf. weiteren Wärmeaustauschern, die in der Zeichnung nicht dargestellt sind, zugeführt werden.

Die Leitung 4 mündet in einen Überhitzer 5, in dem die NO$_x$-Gase Wärme zur Überhitzung von Ammoniak abgeben. Die aus dem Überhitzer 5 austretenden NO$_x$-Gase werden über eine Leitung 6 und ggf. über weitere, nicht dargestellte Wärmeaustauscher in einen Verdampfer 7 für Ammoniak geführt. Am Austritt des Verdampfers 7, für die NO$_x$-Gase ist eine weitere Leitung 8 angeschlossen, durch die die abgekühlten NO$_x$-Gase ggf. über weitere Einrichtungen der Absorption zugeführt werden, die hier nicht näher beschrieben werden.

Über eine Ammoniakzuleitung 9 wird flüssiges Ammoniak aus einem nicht dargestellten Tank oder dgl. unter erhöhtem Druck in den Verdampfer 7 zur Verdampfung geleitet. Dabei kann ggf. in die Leitung 9 noch eine nicht dargestellte Pumpe zur Druckerhöhung des flüssigen Ammoniaks zwischengeschaltet sein. Vom Verdampfer 7 führt eine Ammoniakleitung 10 zum Überhitzer 5 zur Überhitzung des Ammoniaks und von dort eine weitere Ammoniakleitung 11 zu einer Gegendruckturbine 12, in der das überhitzte Ammoniak entspannt wird. Am Austritt der Turbine 12 ist eine weitere Ammoniakleitung 13 angeordnet, die in einen Mischer 14 mündet, in welchem das entspannte, aber noch überhitzte Ammoniak mit Luft vermischt wird, das durch eine Luftleitung 15 dem Mischer 14 zugeführt wird. Der Mischer 14 ist über eine Leitung 16 dem Brenner 1 vorgeschaltet.

Flüssiges $NH_3$ wird mit einem Druck von etwa 10 bis 60 bar in die Leitung 9 geführt und im Verdampfer 7 vollständig verdampft. Das dampfförmige Ammoniak strömt dann durch die Ammoniakleitung 10 in den Überhitzer 5 und wird auf 130 bis 250°C überhitzt. In diesem überhitzten Zustand wird das $NH_3$ anschließend energieerzeugend in der Gegendruckturbine 12 bis auf eine Restüberhitzung entspannt. Dabei erfolgt die Entspannung vorzugsweise auf den bei der Verbrennung im Brenner 1 herrschenden Druck.

Über die Leitung 13 wird das entspannte $NH_3$ dem Mischer 14 zugeführt und dort mit Luft vermischt. Das Ammoniak-Luft-Gemisch gelangt dann in den Brenner 1, wo die Verbrennung zu $NO_x$ bei Temperaturen von etwa 900°C in bekannter Weise abläuft.

Die gebildeten $No_x$-Gase werden im Wärmeaustauscher 2 auf etwa 450°C abgekühlt, wobei mit der Wärmeenergie ein entsprechender Wärmeträger, insbesondere Wasser, aufgeheizt bzw. verdampft wird. Die $NO_x$-Gase werden über die Leitung 4 abgeführt und ggf. weiteren Wärmeaustauschern zugeführt, ehe sie in den Überhitzer 5 gelangen und dort die zur Überhitzung des dampfförmigen $NH_3$ notwendige Wärmeenergie abgeben. Anschließend werden die $NO_x$-Gase dann über die Leitung 6 in den Verdampfer 7 geführt, wo sie weiter abgekühlt werden und ihre abgegebene Wärme entsprechend zur Verdampfung des flüssigen $NH_3$ dient. Über die Leitung 8 gelangen die $NO_x$-Gase dann in bekannter Weise ggf. über weitere Einrichtungen zur Absorption.

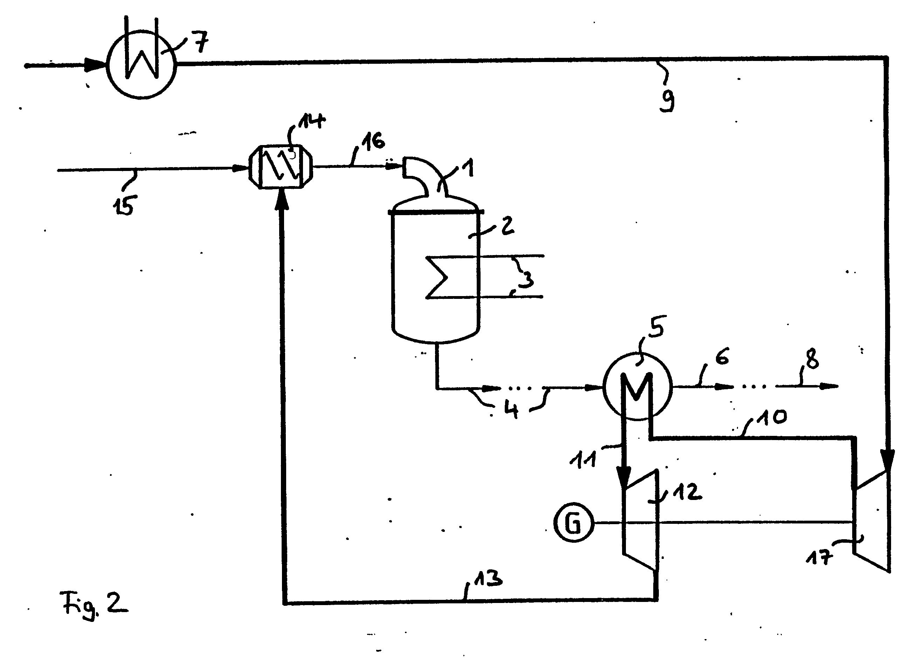

In Fig. 2 ist eine Verfahrensvariante dargestellt, wobei gleiche Bezugszeichen verwendet sind wie in Fig. 1. Zusätzlich zur Anordnung nach Fig. 1 ist ein Ammoniakkompressor 17 vorgesehen, der direkt mit der Gegendruckturbine 12 gekoppelt sein kann. Das flüssige $NH_3$ wird nach dieser Verfahrensvariante zunächst in einem Verdampfer 7 verdampft, wobei ggf. Kälteenergie gewonnen werden kann, und anschließend im Ammoniakkompressor 17 auf einen höheren Druck verdichtet, ehe es im Überhitzer 5 überhitzt und dann entsprechend wiederum in der Gegendruckturbine 12 entspannt wird. Dabei treibt die Gegendruckturbine 12 den Ammoniakkompressor 17 an, wobei die Energieaufnahme des Kompressors 17 jedoch geringer als die Energieabgabe der Turbine 12 ist.

Das entspannte, überhitzte $NH_3$ wird dann über die Leitung 13 entsprechend wieder dem Mischer 14 zugeführt und tritt als Ammoniak-Luft-Gemisch in den Brenner ein. Die erzeugten $NO_x$-Gase werden gemäß dieser Ausführungsvariante nur durch den Überhitzer 5 zur Überhitzung des $NH_3$ geführt, könnten aber selbstverständlich auch durch den Verdampfer 7 geführt werden.

Ausführungsbeispiel:

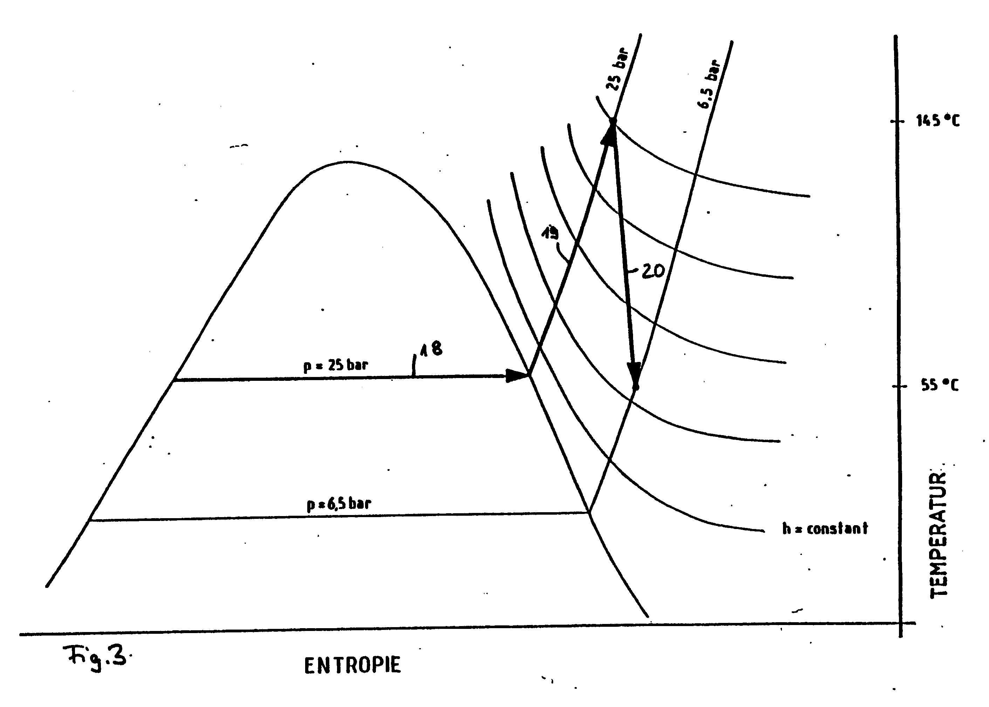

Entsprechend der Verfahrensführung nach Fig. 1 wird flüssiges $NH_3$ mit einer Temperatur von 25°C und einem Druck von 25 bar dem Verdampfer 7 zugeführt. Dabei verdampft das $NH_3$ isobar bei einer Temperatur von 58°C, wobei die isobare Verdampfung im Temperatur/Entropie-Diagramm nach Fig. 3 durch die mit 18 bezeichnete Isobare im Zweiphasengebiet dargestellt ist. Die anschließende Überhitzung im Überhitzer 5 erfolgt dann ebenfalls isobar bis auf eine Temperatur von 145°C. Diese Zustandsänderung ist in Fig. 3 mit dem Bezugszeichen 19 bezeichnet.

Anschließend wird das überhitzte $NH_3$ in der Gegendruckturbine 12 auf 6,5 bar entspannt, die entsprechende Zustandsänderung ist in Fig. 3 mit dem Bezugszeichen 20 angedeutet. Bei einem Turbinenwirkungsgrad von 75 % ergibt sich damit eine Enthalpiedifferenz von etwa 3000 kJ/kmol.

Bei einem Mengenstrom von etwa 1250 kmol/h für eine 1800 tato $HNO_3$-Anlage wird dadurch eine Turbinenleistung von etwa 1,04 MW erzeugt.

Natürlich ist die Erfindung nicht auf die in der Zeichnung dargestellten Ausführungsbeispiele beschränkt. Weitere Ausgestaltungen der Erfindung sind möglich, ohne den Grundgedanken zu verlassen. So kann auch noch eine Beheizung des Ammoniaks mit anderen Wärmeträgern, z. B. heißes Restgas, vorgesehen sein und dgl. mehr.

## Ansprüche

1. Verfahren zur Erzeugung von mechanischer Energie bei der $NH_3$-Oxidation im $HNO_3$-Prozeß, bei dem $NH_3$ durch Verbrennung zu $NO_x$-Gasen umgesetzt wird,
dadurch gekennzeichnet,
daß vor der Oxidation flüssiges $NH_3$ bei einem

Druck, der um ein Mehrfaches über dem Druck bei der Verbrennung liegt, mittels der Prozeßwärme der erzeugten $NO_x$-Gase verdampft und überhitzt wird, und daß anschließend das überhitzte $NH_3$ energieerzeugend in einer Turbine entspannt wird.

2. Verfahren nach Anspruch 1,
dadurch gekennzeichnet,
daß das flüssige $NH_3$ bei einem Druck von 10 bis 60 bar, insbesondere 25 bar, verdampft und überhitzt wird.

3. Verfahren nach Anspruch 1 oder 2,
dadurch gekennzeichnet,
daß das $NH_3$ auf 130 - 250 °C, insbesondere 140 - 180 °C, überhitzt wird.

4. Verfahren nach Anspruch 1 oder einem der folgenden,
dadurch gekennzeichnet,
daß das überhitzte $NH_3$ in der Gegendruckturbine bis auf den bei der Verbrennung herrschenden Druck entspannt wird.

Fig. 1

Fig. 2

EP 0 381 826 A1

Fig.3

ENTROPIE

TEMPERATUR

EP 0 381 826 A1

145 °C

55 °C

p = 25 bar

p = 6,5 bar

25 bar

6,5 bar

h = constant

18

19

20

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | CHEMICAL ABSTRACTS Band 91, Nr. 4, 23. Juli 1979, Seite 138, Zusammenfassung Nr. 23035h, Columbus, Ohio, US; ALLEMANN et al.: "Dry/wet cooling towers with ammonia as intermediate heat exchange medium" & Energy Res. Abstr. 1979, Band 4, Nr. 1, Zusammenfassung Nr. 540 --- | 1 | C 01 B 21/26 |
| A | PATENT ABSTRACTS OF JAPAN Band 3, Nr. 118 (C-60), 4. Oktober 1979; & JP - A - 54 97604 (SHIN NIPPON SEITETSU K.K.) 08.01.1979 --- | 1 | |
| A | DE-C- 900 453 (BADISCHE ANILIN- & SODA FABRIK AG) * Anspruch 1 * --- | 1 | |
| A | DE-C- 752 321 (I.G. FARBENINDUSTRIE AG) * Anspruch 1 * --- | 1 | |
| A | DE-C- 648 294 (FRIEDRICH UHDE et al.) * Ansprüche 1,2 * --- | 1 | RECHERCHIERTE SACHGEBIETE (Int. Cl.5)  C 01 B 21/26 |
| A | DE-C- 622 874 (HARRY PAULING) * Anspruch 1 * ----- | 1 | |

Der vorliegende Recherchenbericht wurde für alle Patentansprüche erstellt

| Recherchenort | Abschlußdatum der Recherche | Prüfer |
|---|---|---|
| BERLIN | 04-05-1990 | CLEMENT J.P. |